Europäisches Patentamt

European Patent Office

Office européen des brevets

(11) Numéro de publication: **0 020 247**
**B1**

(12) **FASCICULE DE BREVET EUROPEEN**

(45) Date de publication du fascicule du brevet: **31.10.84**

(21) Numéro de dépôt: **80400717.7**

(22) Date de dépôt: **22.05.80**

(51) Int. Cl.³: **G 06 K 13/07**, **E 05 B 49/00**, **G 06 K 17/00**

(54) **Portier à carte codée pour ouverture sélective de porte.**

(30) Priorité: **23.05.79 FR 7913078**

(43) Date de publication de la demande:
**10.12.80 Bulletin 80/25**

(45) Mention de la délivrance du brevet:
**31.10.84 Bulletin 84/44**

(84) Etats contractants désignés:
**AT BE CH DE GB IT LI LU NL SE**

(56) Documents cités:
**FR-A-1 599 735**
**US-A-3 606 698**
**US-A-3 845 361**
**US-A-3 959 630**

(73) Titulaire: **CHAUVAT-SOFRANO**
**Route de Paris**
**Avermes F-03000 Moulins (FR)**

(73) Titulaire: **Chauvat, Dominique**
**Chalet des Mounines**
**Bressolles F-03000 Moulins (FR)**

(73) Titulaire: **Charpentier, Michel**
**42 avenue des Jardins Anglais**
**F-77410 Claye-Souilly (FR)**

(72) Inventeur: **Chauvat, Dominique**
**Chalet des Mounines**
**Bressolles F-03000 Moulins (FR)**
Inventeur: **Charpentier, Michel**
**42 Avenue des Jardins Anglais**
**F-77410 Claye-Souilly (FR)**

(74) Mandataire: **CABINET BONNET-THIRION**
**95 Boulevard Beaumarchais**
**F-75003 Paris (FR)**

Courier Press, Leamington Spa, England.

# Description

L'invention se rapporte à un portier à carte codée, destiné à autoriser sélectivement un porteur de carte à franchir une porte s'ouvrant dans une cloison.

Dans des établissements dont l'accès doit être restreint, pour des raisons de sécurité, à certaines personnes habilitées, soit pour l'ensemble de l'établissement, soit pour certaines zones de celui-ci, il est courant de munir ces personnes de clefs capables d'ouvrir sélectivement les serrures des portes donnant accès aux zones de l'établissement où ces personnes sont autorisées à entrer. Les possibilités de combinaisons sont relativement limitées, en ce sens que chaque serrure ne peut admettre qu'un petit nombre de clefs différentes dans leur profil actif, ce qui revient à dire que c'est la constitution de la serrure qui détermine les catégories de clefs opérantes, et que la structure de division en zones de l'établissement est figée, sauf à changer les serrures. Par ailleurs les clefs peuvent être volées ou copiées, et dans ce cas le maintien de la sécurité nécessite le changement des serrures correspondant à la clef susceptible d'être utilisée frauduleusement.

Il a été proposé de remplacer les clefs de combinaison par des cartes codées, notamment magnétiques, qui portent un enregistrement d'un signal numérique. Le brevet français N° 2.107.529 décrit un portier à carte magnétique, notamment pour chambre d'hôtel, où un lecteur de carte, disposé à proximité de la porte à laquelle est affectée la carte magnétique, est relié à une unité centrale distante. Le signal lu sur la carte magnétique, accompagné d'un signal d'identification du portier, est envoyé à l'unité centrale qui détermine, selon son programme et les informations stockées en mémoire, si la carte correspond bien au portier et si, par comparaison avec des consignes mémorisées, la carte est actuellement valide. Si la détermination est positive, l'unité centrale envoie un signal d'exécution à un moyen d'ouverture, tel qu'une gâche électrique pour déverrouiller la porte. Les possibilités de combinaisons sont très largement étendues, non seulement parce que le signal codé sur la carte peut contenir un beaucoup plus grande nombre d'informations que le profil d'une clef, mais aussi parce que c'est le signal porté sur la carte, et non plus la serrure, qui est déterminant pour l'autorisation d'accès. Alors que la clef est associée à une ou plusieurs serrures, la carte est associée à son porteur. Toutefois la disposition avec une unité centrale distante exige que le portier soit constitué et relié à l'unité centrale comme un périphérique d'ordinateur, et la fiabilité du portier dépend de la qualité de la liaison à l'unité centrale.

La demande de brevet français N° 2.325.992 ainsi que le brevet US—A— 3,845,361 décrivent un portier autonome commandé par carte magnétique, et programmé pour accepter ou refuser l'entrée à une ou plusieurs cartes. Une mémoire est associée au portier, et l'on y enregistre une première liste de signaux dite d'autorisation, et une seconde liste dite de suppression d'autorisation. Le portier n'ouvre la porte que si le signal porté par la carte engagée dans le lecteur figure sur la liste des signaux d'autorisation, et ne figure pas en outre sur la liste de suppression d'autorisation. Cette disposition est plus simple que la disposition à unité centrale de commande et son fonctionnement ne dépend pas de la qualité de liaisons à une unité centrale, ni de la disponibilité de cette unité. Mais par contre cette disposition est relativement rigide, en ce sens que lorsque l'autorisation d'accès d'un porteur de carte est retirée par inscription sur la liste de suppression, il n'est plus possible de revalider l'autorisation; il n'existe donc aucune possibilité de moduler dans le temps les autorisations.

En outre l'inscription sur la liste de suppression nécessite de relier au portier un "programmateur manuel".

Par ailleurs les portiers connus, qu'ils fassent appel à une unité centrale de pilotage ou qu'ils soient autonomes, ne sont prévus que pour l'accès sélectif à un franchissement de la porte dans un sens déterminé, et l'ouverture pour le franchissement dans l'autre sens est libre. Un franchissement sélectif dans les deux sens obligerait à disposer un lecteur de chaque côté de la porte. En outre rien n'assure que le franchissement de la porte est suivi d'une refermeture de celle-ci, de sorte que si, par négligence, la personne habilitée laisse la porte ouverte derrière elle, le franchissement de la porte devient libre. De plus, si cette personne habilitée oublie sa carte dans le lecteur, n'importe qui peut s'en emparer pour ouvrir la porte.

L'invention a pour objet un portier à carte codée, autonome, capable d'autoriser le franchissement sélectif de la porte dans les deux sens, et ne restituant la carte qu'après que la porte a été refermée.

A cet effet l'invention propose un portier à carte codée, destiné à autoriser sélectivement un porteur de carte à franchir une porte dans une cloison, et comportant un lecteur de carte à proximité de la porte du côté de la cloison où se présente le porteur avec une tête de lecture adaptée à lire un signal numérique enregistré sur une bande codée étendue suivant un axe longitudinal de la carte en réponse à l'engagement de celle-ci dans le lecteur, un moyen d'ouverture de porte mis en action par un signal électrique d'exécution, et des moyens logiques reliant lecteur et moyen d'ouverture et adaptés à comparer le signal numérique lu avec une pluralité de signaux numériques enregistrés en mémoire et à envoyer au moyen d'ouverture un signal d'exécution en réponse à l'équivalence du signal lu vec ou moins un des signaux de la pluralité, ces moyens logiques comprenant un microprocesseur associé à des mémoires mortes où sont enregistrès un programme et au moins une partie de la pluralité des signaux numériques précités, et une mémoire tampon connectée au microprocesseur et associé à la tête de lecture, caractérisé en ce qu'il est capable d'autoriser le franchissement sélectif de la parte dans l'un ou l'autre sens et que le lecteur comporte un couloir de passage longitudinal de carte débouchant de part et d'autre de la cloison par des guichets avec chacun un détecteur sensible à la présence d'une carte dans le guichet, entre les deux guichets un transporteur de carte à course commandée dans les deux sens, la tête de lecture disposée en position médiane entre les guichets et de telle sorte que la plage codée défile devant cette tête par entraînement par le transporteur, les moyens logiques étant adaptés, en réponse à l'introduction d'une carte dans un des guichets qui sera dit de ce fait premier guichet, à déclencher une course du transporteur de carte dans un premier sens où la carte défile du premier guichet jusqu'au-delà de la tête de lecture, en réponse à la comparaison du signal lu par la tête avec les signaux de la pluralité, en premier cas où l'équivalence précitée n'est pas reconnue, à déclencher une course du transporteur en sens opposé au premier jusqu'à engager la carte dans le premier guichet, en deuxième cas, où cette équivalence est reconnue, à émettre un signal d'exécution vers le moyen d'ouverture, un moyen sensible à la fermeture de la porte déclenchant alors une course du transporteur jusqu'à engager la carte dans le second guichet, les moyens logiques comprenant en outre une mémoire vive capable d'enregistrer des signaux numériques particuliers en complément de ceux qui sont enregistrés en mémoire morte, pour constituer la pluralité de signaux numériques de comparaison, ces signaux numériques étant introduits sous forme d'une séquence de signaux distincts des signaux lus par le tête de lecture, dont la comparaison les classe en deuxième cas, en sorte de modifier les conditions d'autorisation sélective.

L'introduction de la carte dans le guichet situé du côté de la cloison où se présente le porteur de carte provoque l'entrée de la carte dans le couloir et la lecture de la bande codée. Si le signal numérique porté par cette bande ne correspond pas à un signal d'autorisation, la carte est restituée, sans que la porte s'ouvre, à son porteur qui peut vérifier qu'il n'a pas fait une fausse manoeuvre, ou que la porte n'est pas celle qu'il est autorisé à franchir. Par contre, si le signal porté par la bande codée correspond à une autorisation, la porte s'ouvre. Mais le porteur doit franchir la porte et la refermer derrière lui pour pouvoir récupérer sa carte, celle-ci ne devenant accessible dans le second guichet qu'après la fermeture.

On peut prévoir que, si le signal porté par la carte fait partie d'une liste noire, par exemple si la carte correspondante a été volée ou égarée, le moyen de transport se remet en marche dans le premier sens jusqu'à dégager la carter du second guichet, sans que la porte s'ouvre bien entendu. Ainsi la carte frauduleuse est retirée de la circulation.

En décalant latéralement la tête de lecture par rapport à l'axe médian longitudinal du couloir, et en disposant deux pistes codées parallèles sur la bande de carte, il est possible de diversifier les autorisations de franchissement de la porte suivant le sens de ce franchissement. On comprendra qu'en général les conditions de sortie d'un local peuvent être moins draconiennes que les conditions d'entrée. Par contre on peut augmenter la sécurité en n'autorisant la sortie que si elle a été précédée d'une entrée par usage de la même carte.

De préférence l'ouverture de la porte s'accompagne du lancement d'une temporisation, de sorte qu'une aarme soit déclenchée si la porte n'est pas refermée avant la fin du délai de temporisation. On réduit ainsi les risques de franchissement multiples à l'aide d'une seule carte.

Avantageusement un moyen de déclenchement d'alarme est bloqué et par le moyen sensible à la fermeture de la porte et par le moyen de temporisation entre le lancement et la fin de temporisation. Toute ouverture de la porte intempestive est signalée aussi bien qu'une ouverture autorisée prolongée à l'excès.

Les moyens logiques comprennent une mémoire vive où l'on enregistre des signaux lus par la tête de lecture, de façon à moduler les consignes de franchissement en réponse à la lecture de cartes.

Dans cette mémoire vive on peut également enregistrer des signaux horaires ou calendaires émis par une horloge associée au portier, de façon à moduler les autorisations de franchissement suivant l'heure, le jour de la semaine ou la date.

On peut aussi y enregistrer des signaus issus d'un poste central de commande, pour répondre à des situations particulières.

De préférence encore les moyens logiques comportent une sortie de signaux de liste que pourront être envoyés à une unité centrale. Celle-ci permettra un contrôle général de fonctionnement d'un ensemble de portiers, sans interférer sur la fonctionnement individuel de chaque portier qui reste autonome.

Les caractéristiques et avantages de l'invention ressortiront d'ailleurs de la description qui va suivre, à titre d'exemple, en référence aux dessins annexés dans lesquels:

la figure 1 représente la disposition générale d'un portier selon l'invention, monté dans une cloison pour commander une porte;

la figure 2 représente le portier vu der l'embrasure de la porte;

la figure 3 est une coupe longitudinale schématique d'un portier selon l'invention;

la figure 4 est une vue en plan d'un couloir de carte;

la figure 5 est un schéma de disposition de mémoire tampon associée à une tête de lecture;

la figure 6 est un diagramme de commande des opérations d'un portier selon l'invention.

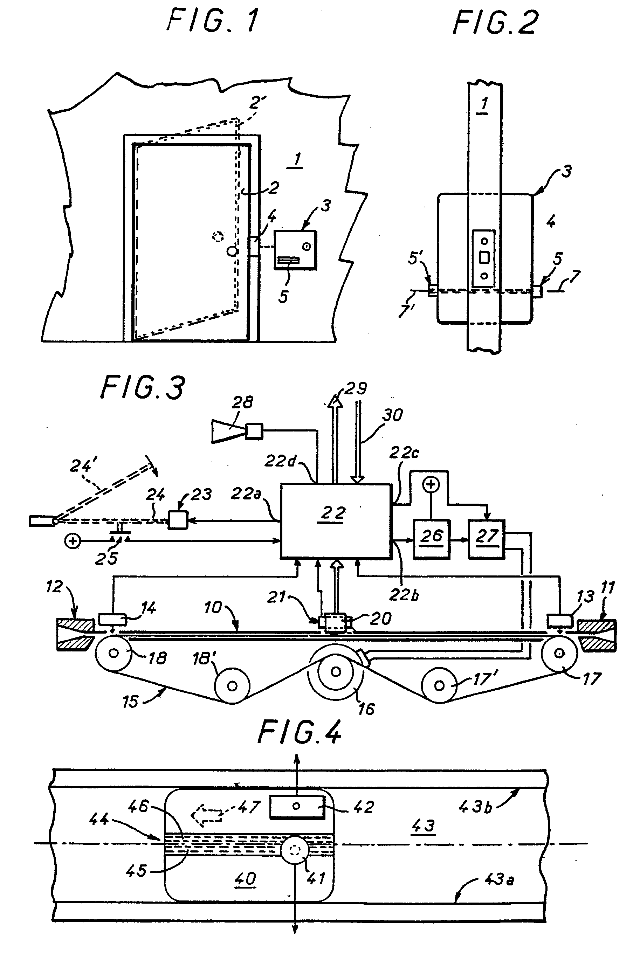

Selon la forme de réalisation choisie et représentée figure 1, la cloison 1 qui délimite une zone dont l'accès doit être sélectif, est percée d'une porte, représentée par 2 à l'état fermé, et par 2' à l'état ouvert, l'ouverture de la porte étant commandée par une gâche électrique 4, en réponse à un signal d'exécution envoyé par un portier 3, lorsqu'une carte magnétique portant un signal numérique codé, introduite dans un guichet 5, a été reconnue comme acceptable par le portier 3. On remarquera que selon la vue de la figure 1, la disposition ne se distingue pas sensiblement des dispositions de l'état de la technique. Cependant on voit mieux sur la figure 2 que le portier 3 comporte deux guichets 5 et 5', de part et d'autre de la cloison 1, et communiquent l'un avec l'autre par un couloir 6, de sorte qu'une carte magnétique peut être introduite en position 7 dans le guichet 5, ou bien en position 7' dans le guichet 5', selon le côté où un porteur de carte aborde la porte. On expliquera plus loin comment la carte peut être récupérée, selon les circonstances, dans l'un ou l'autre des guichets 5 et 5'.

Comme représenté figure 3, le portier comporte un couloir longitudinal 10, terminé à ses extrémités par des guichets 11 et 12, munis de détecteurs de présence de carte respectivement 13 et 14. Le fond du couloir 10 est constitué par une bande sans fin 15, qui passe sur les galets de renvoi 17 et 18, situés respectivement en dessous des détecteurs 13 et 14, sur les galets de tension 17' et 18', et sur la poulie d'un moteur d'entraînement 16, susceptible de tourner dans les deux sens. On a compris qu'une carte magnétique présentée dans l'un des guichets 11 et 12, sera entraînée vers l'autre guichet sous l'effet d'une rotation dans le sens convenable du moteur 16.

Vers la position longitudinale médiane du couloir 10 est disposée une tête de lecture magnétique 20, ainsi qu'un détecteur de présence de carte 21.

Un ensemble 22 comprenant un microprocesseur et des circuits associés agissant en moyen logique de pilotage des opérations, est susceptible de recevoir des informations de présence de carte des détecteurs 13, 14 et 21, des signaux numériques issus de la tête de lecture 20, et un signal d'information de fermeture de la porte 24 en provenance du contact 25. L'ensemble 22 comporte en outre des sorties, 22a pour un signal d'exécution en direction de la gâche électrique 23, 22b en direction d'un relais 26 de commande de marche du moteur 16, 22c en direction d'un inverseur 27 de sens de rotation du moteur 16, 22d en direction d'un avertisseur sonore 28, et facultativement une sortie de signaux de liste 29, en direction d'une unité centrale de surveillance, non représentée, et une entrée 30 de signaux en provenance d'un poste central de commande.

Le fonctionnement du portier est le suivant: l'introduction d'une carte, présentant un signal numérique codé sur une bande magnétique étendue suivant un axe médian longitudinal, dans l'un des guichets 11 ou 12, qui sera dit par la suite le premier guichet, provoque l'émission par le détecteur de présence de carte respectif 13 ou 14, d'un signal en direction de l'ensemble 22, qui a pour effets, d'une part de définir une position de l'inverseur 27 telle que le moteur entraîne la bande 15 dans un sens dit ci-après premier sens correspondant à un transport de la carte depuis le premier guichet (11 ou 12 suivant le cas) vers le second guichet (12 ou 11 suivant le cas), et d'autre part de fermer le relais 26, ce qui déclenche la course effective de la bande dans le premier sens. La carte entraînée dans cette course vient passer sous la tête de lecture 20, qui transmet à l'ensemble 22 le signal numérique lu. Simultanément le détecteur 21 envoie au microprocesseur un signal de présence de carte. Lorsque le microprocesseur a pris en compte la totalité du signal numérique enregistré avant que la carte ait échappé au détecteur 21, le microprocesseur envoie au relais 26 un signal d'arrêt, puis procède à l'analyse du signal pris en compte. Par contre si la carte a échappé au détecteur 21 sans que la totalité du signal numérique porté par la carte ait été pris en compte par le microprocesseur en raison d'une perturbation du processus de lecture, le relais 26 est ouvert, l'inverseur 27 changé de position pour commander une rotation du moteur dans un second sens, le relais 26 fermé à nouveau de manière que la carte soit envoyée vers le premier guichet, pour s'ouvrir lorsque le détecteur de présence associé à ce premier guichet décélera la présence de la carte. Le porteur de carte pourra alors récupérer sa carte, puis reprendre l'introduction pour obtenir une lecture sans incident.

L'analyse du signal lu complètement est un processus logiciel qui échappe au cadre de la présente invention, et qui consiste à comparer le signal lu à des ensembles de signaux mémorisés dans des mémoires associées au microprocesseur et comprenant une mémoire morte et une mémoire vive. Un premier ensemble correspond aux autorisations d'ouverture, un deuxième ensemble correspond à des présomptions de fraude grave (par exemple des signaux codés d'une carte volée ou égarée) et un troisième ensemble identifiant un code de cheminement de programme. Trois cas peuvent se présenter:

1°) les signaux analysés ne correspondent ni au premier ensemble, ni au deuxième ensemble;

2°) les signaux correspondent au premier ensemble;

3°) les signaux correspondent au deuxième ensemble.

Dans le premier cas, l'analyse se poursuit pour vérifier si les signaux lus appartiennent ou non au troisième ensemble. Si oui le code de cheminement de programme, dont on précisera plus loin la consistance, est enregistré dans la mémoire vive. Si non, l'analyse s'arrête. Après quoi, qu'un code de cheminement de programme ait été enregistré ou non, un signal sur la sortie 22*c* commande la manoeuvre de l'inverseur 27, puis le relais 26 est fermé et le moteur démarre dans le second sens. La présence de la carte décelée par le détecteur associé au premier guichet provoque l'ouverture du relais 26, et la carte est restituée à son porteur. A part un en registrement volontaire de carte de code de cheminement de programme, la restitution de la carte au porteur signifie qu'il n'est pas autorisé à franchir la porte.

Dans le deuxième cas, le microprocesseur émet sur sa sortie 22*a* un signal d'exécution, et la porte 24 s'ouvre en venant en position 24'. Simultanément une temporisation est lancée, pour une durée correspondant au franchissement sans hâte de la porte 24. Si la porte 24' est remise en position fermée 24 avant la fin de la durée de temporisation, celle-ci est sans effets. Sinon un signal est émis sur la sortie 22*d*, mettant en action l'avertisseur sonore 28, de façon à prévenir que la porte est restée ouverte pendant une durée anormalement longue.

De toute façon la fermeture de la porte ferme le contact 25, ce qui provoque la fermeture du relais 26, et le moteur 16 se remet en marche dans le premier sens. L'arrivée de la carte dans le second guichet provoque l'ouverture du relais 26 et l'arrêt du moteur 16. Le porteur de carte peut ainsi récupérer sa carte, qui l'a accompagné dans son franchissement de la porte.

En variante, le signal d'alarme est émis en toute circonstance lorsque le contact 25 est ouvert et que la temporisation n'est pas en écoulement entre son lancement et sa fin, de sorte qu'une ouverture intempestive ou frauduleuse de la porte soit signalée. Le montage des circuits nécessaires est évident pour un homme du métier.

Dans le troisième cas enfin, le relais 26 est fermé pour remettre le moteur en marche; dans le premier sens, tandis qu'une temporisation est lancée, pour une durée telle que la carte soit éjectée par le deuxième guichet, puis le relais 26 s'ouvre. On a pu prévoir une corbeille sous le guichet de façon à recueillir la carte. La carte litigieuse est ainsi retirée de la circulation.

Selon la disposition représentée figure 4, la carte 40 de forme générale rectangulaire, est guidée longitudinalement dans le couloir 43 par les parois latérales 43*a* et 43*b*. La carte porte suivant son axe médian longitudinal une bande 44 en matériau magnétisable, divisée en deux pistes 45 et 46 symétriques par rapport à l'axe médian longitudinal. La tête de lecture 41 est décalée latéralement par rapport à l'axe médian longitudinal du couloir 43, en sorte que, suivant le sens d'introduction de la carte 40 présentée bien entendu dans le guichet avec l'orientation repérée par la flèche 47 imprimée sur la carte, l'une ou l'autre des pistes 45 ou 46 défile sous la tête 41. A côté de la tête 41 est disposé le détecteur de présence de carte 42. On a compris que les signaux numériques enregistrés sur les pistes 45 et 46 peuvent différer par certains éléments, de sorte que les conditions d'autorisation d'ouverture peuvent être différentes suivant le sens de franchissement sollicité. On conçoit, par exemple, que les horaires où sont autorisées l'entrée et la sortie de la zone à accès sélectif peuvent être différents.

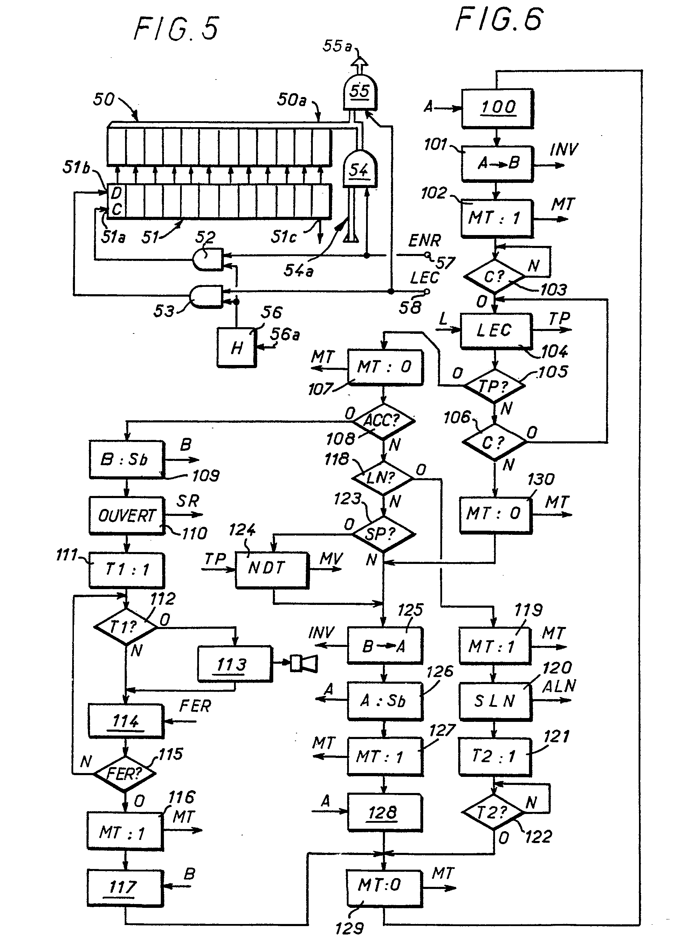

Entre la tête de lecture et le microprocesseur est intercalé un tampon, comme représenté figure 5. Le signal numérique porté par la carte est divisé en une pluralité déterminée de mots, chacun comportant un nombre déterminé de chiffres binaires, par exemple huit (octets). La mémoire tampon 50 comporte autant d'emplacements de mots que le signal numérique porté par la carte comporte de mots. Un compteur d'adresse 51, de capacité de comptage égale au nombre d'emplacements de mémoire tampon 50, est associé à celle-ci, et comporte une entrée de comptage 51*a*, une entrée de décomptage 51*b* et une entrée de débordement 51*c*, plus les sorties d'adresses successives reliées aux emplacements correspondants de la mémoire tampon 50. Celle-ci comporte une barre omnibus 50*a* pour la circulation des mots, reliée à la sortie d'une porte "ET" 54 dont l'entrée de signal de mot 54*a* est couplée à la tête de lecture, la barre omnibus 50*a* étant reliée à l'entrée de signal de mot d'une porte "ET" 55, dont la sortie 55*a* est couplée au microprocesseur. Par ailleurs les entrées de comptage 51*a* et de décomptage 51*b* sont reliées respectivement aux sorties de portes "ET" 52 et 53, qui reçoivent conjointement sur une première entrée des impulsions issues d'une horloge 56, tandis que leurs secondes entrées sont reliées respectivement à des entrées de commande d'enregistrement 57 et le lecture 58. Ces entrées de commande 57 et 58 sont également reliées respectivement aux secondes entrées des portes 54 et 55.

L'horloge 56 est constituée par un compteur diviseur par le nombre de chiffres binaires d'un mot. Sur l'entrée 56*a* sont appliquées des impulsions au rythme, soit de la prise en compte par la tête de lecture des chiffres binaires successifs du signal numérique porté par la carte, soit de l'horloge interne du microprocesseur.

Lorsqu'une carte arrive à proximité de la tête de lecture, le détecteur de présence associé (21 de la figure 3, 42 de la figure 4) un "1" logique est appliqué à l'entrée d'enregistrement 57, provoquant l'ouverture de la porte "ET" 54, qui relie la barre omnibus 50*a* à la tête de lecture, et celle de la porte "ET" 52, de sorte que les impulsions d'horloge issue de 56 parviennent à l'entrée de comptage 51*a* du compteur d'adresse 51. Chaque fois qu'un mot complet est lu, le compteur 51 s'incremente d'une unité, de sorte que chacun des mots successifs du signal numérique vient s'enregistrer dans l'emplacement de mémoire 50 qui lui est réservé. Lorsque tous les mots ont été lus et enregistrés en mémoire, un signal apparaît sur la sortie de débordement 51c, indiquant ainsi que le processus d'enregistrement s'est effectué correctement. Il a été expliqué précédemment que l'enregistrement correct est nécessaire pour que l'analyse puisse s'effectuer. Par contre si la tête de lecture n'a pas perçu le nombre complet de chiffres binaires que doit comporter le signal numérique, il n'apparaît pas de signal de débordement sur la sortie 51c, et la carte est renvoyée au premier guichet sans que l'analyse soit effectuée. Bien entendu dans ce cas le compteur 51 est remis à zéro.

Pour envoyer le signal numérique enregistre mot par mot au microprocesseur, un "1" logique est appliqué à l'entrée 58, provoquant l'ouverture de la porte "ET" 55 qui couple la barre omnibus 50a à l'entrée de données du microprocesseur, reliée à la sortie 55a de la porte 55, ainsi que l'ouverture de la porte "ET" 53, qui couple l'horloge 56 à l'entrée de décomptage 51b du compteur d'adresse 51. Au rythme d'acquisition des mots par le microprocesseur, le compteur 51 se décrémente, de sorte que l'acquisition du signal numérique s'effectue par mots successifs dans l'ordre inverse de la lecture de la carte. De cette façon, s'il s'est produit une erreur de lecture à un chiffre quelconque du signal numérique, l'erreur de lecture qui se répercute sur tous les mots lus à partir de cette erreur, va apparaître sur le premier mot acquis par le microprocesseur. Dès le premier mot, l'analyse fera donc apparaître que le signal enregistré dans la mémoire tampon ne figure dans aucun des trois ensembles correspondant respectivement à une autorisation, une présomption de fraude, et à un code de cheminement de programme, de sorte que la carte sera renvoyée dans le premier guichet sans qu'une fausse manoeuvre soit commandée par le portier.

Bien entendu, le tampon en logique câblée dont la structure et le fonctionnement viennent d'être décrits peut être remplacé par un programme de lecture piloté par le microprocesseur, où les signaux numériques sont enregistrés en mémoire vive, puis repris pour analyse.

Au microprocesseur, par exemple de type MOS 6502 sont associées une mémoire morte, soit une mémoire dite PROM (mémoire programmable à lecture seule), soit une mémoire dite REPROM (mémoire reprogrammable à lecture seule), dans laquelle sont enregistrés le programme ainsi qu'une pluralité de signaux numériques de base, correspondant aux consignes générales permanentes qui régissent les autorisations et des variantes de cheminement de programme, et une mémoire vive où s'enregistreront des signaux numériques, notamment des mots particuliers d'un signal numérique porté par une carte spécialisée de code de cheminement de programme. Ces mots particuliers sont prévus pour aiguiller le programme sur des variantes de cheminement de programme, de sorte que l'introduction à la suite d'une carte normale ait pour résultat l'enregistrement en mémoire vive de mots portés par cette carte pour modifier l'ensemble d'autorisation, ou l'ensemble de présomption de fraude, par exemple.

Au microprocesseur peut être associée une horloge émettant des signaux horaires et calendaires, de sorte que soient définies des périodes de la journée ou des jours où les autorisations de franchissement sont vilidées ou non. Il est alors possible, sans intervention directe sur le portier, de n'autoriser l'entrée dans une zone à accès sélectif qu'à certaines heures de la journée, ou à certains jours, et ce pour des personnes déterminées. Les modifications d'autorisation en fonction de l'heure ou du jour se feront par introduction d'une carte de code de cheminement de programme appropriée, suivie de l'introduction d'une carte portant des signaux de calage d'horloge, correspondant aux périodes d'autorisation désirées.

Comme il est représenté à la figure 3, le microprocesseur peut comporter une entrée de données 30, qui sera reliée à un poste central de commande. Ceci permettra de diriger sur le microprocesseur des signaux numériques analogues aux signaux codés sur les cartes, soit pour enregistrer en mémoire vive des signaux de code de cheminement de programme modifiant les ensembles d'autorisation ou de présomption de fraudes, soit même pour provoquer une ouverture générale ou sélective des portes munies de portier, par exemple en cas de sinistre.

Sur la sortie de signaux de liste 29 apparaissent des signaux numériques représentatifs de certains pas du programme, correspondant aux instructions principales, et des données prises en compte pour ces pas. En reliant la sortie 29 à un ordinateur central convenablement programmé, on peut faire apparaître sur un dispositif d'affichage la traduction en claire du fonctionnement du portier, analogue dans son principe à un listage classique en informatique, ce listage constituant une surveillance du fonctionnement. On remarquera que ce listage n'intervient nullement dans le fonctionnement du portier qui reste réellement autonome.

Par ailleurs, notamment pour des établissements où sont installés des portiers en petit nombre, et où les frais d'utilisation permanente d'un ordinateur en surveillance ne sont pas justifiés, on peut associer à chaque portier un enregistreur à cassette, couplé à la sortie 29. En fin de journée, par exemple, le relecture de la cassette enregistrée permettra un contrôle à posteriori du fonctionnement du portier. On remarquera que ces enregistrements peuvent fournir en outre des éléments du pointage de présence et d'horaires effectués, en conjunction avec des signaux horaires et calendaires.

La figure 6 représente un diagramme de programme de base, utilisé pour commander les diverses manoeuvres du portier. Le programme débute au pas 100, où un signal de présence de carte émis par l'un des détecteurs 13 ou 14 associé au guichet respectif 11 ou 12 détermine le lancement du programme et simultanément l'enregistrement du guichet associé au détecteur activé comme premier guichet A. Le pas 101 détermine la position de l'inverseur (27 de la figure 3) donnant une course du premier guichet A au second guichet B. Le pas 102 ferme le relais (26 de la figure 3) de mise en marche du moteur (noté MT:1). Le pas 103, conditionnel fait tourner le programme en boucle fermée tant que la présence de la carte n'a pas été décelée par le détecteur C (21 de la figure 3) associé à la tête de lecture. L'activation du détecteur C conduit au pas 104 où la tête de lecture L est mise en communication avec le tampon TP pour l'enregistrement d'un groupe de chiffres, normalement un mot, puis le programme passe au pas conditionnel 105. Tant que le tampon n'est pas plein, le programme passe au pas conditionnel 106 où est vérifié que le détecteur C est toujours activé, auquel cas le programme retourne au pas 104 pour l'acquisition du mot suivant, et le programme tourne sur la boucle 104, 105, 106 jusqu'au remplissage complet du tampon, suivant le processus expliqué en référence à la figure 5. A ce moment le programme passe du pas 105 au pas 107. Par contre si le détecteur C a été désactivé avant que le tampon soit plein, ce qui correspond à un raté de lecture, le programme passe du pas 106 au pas 130.

En reprenant au pas 107, où le relais (26 de la figure 3) de marche du moteur est ouvert (noté MT:0), le programme passe au pas conditionnel 108, où le microprocesseur analyse le signal enregistré pour déterminer si les conditions d'autorisation d'accès sont remplies. Si Non le programme passe au pas 118; si Oui le programme passe au pas 109 où le détecteur du second guichet B est sensibilisé, puis au pas 110 où est lancé, en direction de la gâche électrique SR (23 de la figure 3) un signal d'exécution provoquant l'ouverture de la porte. Au pas 111 de temporisation T1 (durée maximale d'ouverture de porte tolérée) est lancée (noté T1:1), puis le programme passe au pas conditionnel 112 où est vérifié (T1:?) si la temporisation T1 est écoulée. Tant que cette condition n'est pas vérifiée le programme passe au pas 114, où l'on enregistre l'état du contact FR de fermeture de porte (25 de la figure 3), puis au pas conditionnel 115, où est vérifié (FER ?) si le contact FER est en position de fermeture de la porte. Si Non le programme retourne au pas 112. Le programme tourne sur la boucle 112, 114, 115. Si la temporisation T1 est écoulée avant l'apparition du signal FER, le programme passe du pas 112 au pas 113, où l'avertisseur d'alarme (28 de la figure 3) est mis en action, puis au pas 114, au pas 115 et se reboucle en 112—113. L'apparition d'un signal FER au pas 114, que l'avertisseur d'alarme ait étémis en action ou non provoque le passage du programme du pas 115 au pas 116, où le relais de moteur est fermé, puis au pas 117 où un signal de présence de carte dans le guichet B provoque le passage au pas 129, où le relais de moteur est ouvert, après quoi le programme retourne en attente au pas 100. L'arrêt du moteur consécutif au pas 117 correspond à la présence de la carte dans le second guichet B, où son titulaire peut la récupérer.

Si au pas 108, l'autorisation d'accès n'est pas reconnue, le programme passe au pas conditionnel 118, où sont vérifiées les présomptions de fraude (LN ?). Si l'analyse reconnaît une présomption de fraude (enregistrement du signal de la carte en liste noire dans la mémoire vive), le programme passe au pas 119 où le relais de moteur est fermé, au pas 120 où est commandé un signal d'alarme de fraude ou de liste noire ALN, au pas 121 où est lancée une temporisation T2 (noté T2:1), d'une durée suffisante pour que la carte se dégage du second guichet B, au pas conditionnel 122, où par vérification de l'écoulement complet de la temporisation T2 le programme tourne en boucle jusqu'à réalisation de cet événement, après quoi le programme passe au pas 129 où le relais de moteur est ouvert en fin de programme. On remarquera que dans cette situation, la carte présumée d'usage frauduleux est retirée à son porteur qui reste du côté du premier guichet A par rapport à la cloison, tandis que la carte éjectée du second guichet B, de l'autre côté de la cloison, tombe dans un réceptacle disposé à cet effet. Par ailleurs l'alarme de fraude ALN met en éveil le personnel de sécurité.

Si les tests des pas 108 et 118 ont été négatifs, le programme passe du pas 118 au pas conditionnel 123, où l'analyse du signal détermine s'il s'agit d'une carte impliquant un code de cheminement de programme. Si Non le programme passe au pas 125, si Oui le programme passe au pas 124, qui commande l'acquisition par la mémoire vive MV des mots de code de cheminement de programme enregistrés dans le tampon, puis passe au pas 125, où l'inverseur INV (27 de la figure 3) change de position pour que la course de carte soit du second guichet B au premier guichet A, puis au pas 126 où le détecteur associé au premier guichet A est sensibilisé, au pas 127 où le relais de moteur est fermé, au pas 128 où le programme est mis en attente jusqu'à activation du détecteur de premier guichet A, et ensuite au pas 129 où l'ouverture du relais de moteur a amené la carte à être accessible dans le premier guichet A où son titulaire peut la récupérer.

Par ailleurs si un remplissage incorrect du tampon a été mis en évidence dans la boucle 104, 105, 106, le programme passe du pas 106 au pas 130, où le relais de moteur est ouvert, puis passe au pas 125 pour effectuer la restitution de carte précédemment décrite, suivant les pas 126, 127, 128 et 129.

Dans toute la description précédente, les éléments de structure du portier, disposition et couplage des organes périphériques et agencement du microprocesseur, qui entrent dans le cadre de la présente invention, ont été énoncés dans un contexte d'éléments de logiciel qui sont en soi en dehors du cadre de l'invention, mais dont l'énonciation est indispensable pour expliciter la coopération des éléments structurels à la solution qu'apporte la présente invention au problème posé. De plus, tout ce qui a trait à l'analyse des signaux numériques, et qui relève de logiciel pur, n'a été exposé qu'en termes généraux fonctionnels, suffisants pour qu'un homme du métier puisse établir un programme convenable, qui assure une mise en oeuvre des éléments structurels conforme aux buts visés par l'invention.

Dans toute la description il n'a pas été mentionné de type précis de détecteurs de présence de carte ou de gâche électrique, car il est évident pour un homme du métier que le choix de ces éléments, disponibles en types divers sur le marché, relève de la routine. Notamment les détecteurs de présence de carte peuvent être des microcontacts électromécaniques, des dispositifs photoélectriques avec une diode électroluminescente et un phototransistor, des détecteurs magnétiques associés à des plages aimantées de carte. Les gâches électriques peuvent s'entendre aussi bien de dispositifs à libération de pêne que de servomoteurs commandant la manoeuvre de la porte, ou électrovanne de vérin pneumatique.

Dans tout ce qui précède, on a considéré des portes simples; d'ailleurs la mise en place de portiers selon l'invention peut être faite dans un immeuble déjà aménagé, sans remplacement des portes. Mais, sans sortir du cadre de l'invention, on peut entendre par porte un sas avec deux portes successives à fonctionnement combiné, utilisable pour réduire le risque de passage de plusieurs personnes avec une carte unique. Le couloir de carte s'étendra alors sur toute la profondeur du sas avec les deux guichets extérieurs, de part et d'autre du sas. Le signal d'exécution provoquera l'ouverture de la porte qui se présente la première dans le sens de franchissement. Le porteur de carte pénétrant dans le sas refermera derrière lui la première porte, ce qui provoquera l'ouverture de la seconde porte, dont la fermeture ultérieure provoquera la restitution de la carte dans le second guichet, au-delà du sas. Le classement des portes en première et seconde s'effectuera, en correspondance avec le classement des guichets en premier et second, en réponse à l'introduction d'une carte dans un guichet, comme il a été expliqué précédemment. Un homme du métier n'aura pas de peine, dans la ligne de la présente description, à déterminer l'enchaînement des opérations à effectuer, la disposition des organes de commande et de contrôle, et les pas de programme correspondant.

En outre la description détaillée a fait état de cartes à bandes magnétiques, analogues aux cartes utilisées couramment pour commander des manoeuvres sélectives comme l'ouverture de portes ou de portillons. Mais il est évident que les cartes pourraient comporter des bandes à codage numérique à lecture par tout procédé convenable, optique, ferro-électrique, sans sortir pour autant du cadre de l'invention.

Enfin le caractère d'autonomie des portiers selon l'invention implique de façon évidente qu'ils peuvent incorporer des dispositifs d'alimentation de secours classiques, de façon à pouvoir fonctionner en cas de coupure de l'alimentation électrique générale, par accident ou malveillance.

On aura compris par ailleurs que l'invention est applicable de façon particulièrement intéressante à des établissements industriels, commerciaux ou scientifiques où sont effectués des travaux qui par leur caractère secret ou les risques qu'ils font courir à des profanes, exigent que l'accès à certaines zones soit réservé à des personnes nommément habilitées, et éventuellement pour des périodes déterminées, encore que l'autonomie des portiers, et la souplesse d'emploi qui en découle, en permettent l'application à des établissements de taille modeste.

## Revendications

1. Portier à carte codée, destiné à autoriser sélectivement un porteur de carte à franchir une porte dans une cloison, et comportant un lecteur de carte à proximité de la porte du côté de la cloison où se présente le porteur avec une tête de lecture (20) adaptée à lire un signal numérique enregistré sur une bande codée étendue suivant un axe longitudinal de la carte (40) en réponse à l'engagement de celle-ci dans le lecteur, un moyen d'ouverture de porte mis en action par un signal électrique d'exécution, et des moyens logiques reliant lecteur et moyen d'ouverture et adaptés à comparer le signal numérique lu avec une pluralité de signaux numériques enregistrés en mémoire et à envoyer au moyen d'ouverture un signal d'exécution en réponse à l'équivalence du signal lu avec au moins un des signaux de la pluralité, ces moyens logiques comprenant un microprocesseur (22) associé à des mémoires mortes où sont enregistrés un programme et au moins une partie de la pluralité des signaux numériques précités, et une mémoire tampon (50) connectée au microprocesseur (22) et associée à la tête de lecture, caractérisé en ce qu'il est capable d'autoriser le franchissement sélectif de la parte dans l'un ou l'autre sens et que le lecteur comporte un couloir (10) de passage longitudinal de carte débouchant de part et d'autre de la cloison par des guichets (11, 12) avec chacun un détecteur (13, 14) sensible à la présence d'une carte dans le guichet, entre les deux guichets un transporteur de carte (15) à course commandée dans les deux sens, la tête de lecture (20) disposée en position médiane entre les guichets et de telle sorte que la plage codée défile devant cette tête (20) par entraînement par le transporteur (15), les moyens logiques étant adaptés, en réponse à l'introduction d'une carte dans un des guichets (11, 12) qui sera dit de ce fait premier guichet, à déclencher une course du transporteur de carte (15) dans un premier sens où la carte défile du premier guichet jusqu'au-delà de la tête de lecture (20), en réponse à la comparaison du signal lu par la tête avec les signaux de la pluralité, en premier cas où l'équivalence précitée n'est pas reconnue, à déclencher une course du transporteur en sens opposé au premier jusqu'à engager la carte dans le premier guichet, en deuxième cas, où cette équivalence est reconnue, à émettre un signal d'exécution vers le moyen d'ouverture (23), un moyen (25) sensible à la fermeture de la porte (24) déclenchant alors une course du transporteur jusqu'à engager la carte dans le second guichet, les moyens logiques comprenant en outre une mémoire vive capable d'enregistrer des signaux numériques particuliers en complément de ceux qui sont enregistrés en mémoire morte, pour constituer la pluralité de signaux numériques de comparaison, ces signaux numériques étant introduits sous forme d'une séquence de signaux distincts des signaux lus par la tête de lecture (20), dont la comparaison les classe en deuxième cas, en sorte de modifier les conditions d'autorisation sélective.

2. Portier selon la revendication 1, où une partie de la pluralité des signaux enregistrés en mémoire correspond à une liste noire, caractérisé en ce que les moyens logiques sont adaptés en outre, en réponse à la comparaison du signal lu par la tête et des signaux de la pluralité, en troisième cas où une équivalence est reconnue avec au moins un signal de ladite liste noire, à déclencher une course du transporteur dans le premier sens jusqu'à éjecter la carte du second guichet.

3. Portier selon la revendication 1 ou la revendication 2, caractérisé en ce que la tête de lecture (41) est décalée latéralement par rapport à l'axe médian longitudinal du couloir (43) en sorte d'explorer une distincte de deux pistes (45, 46) sur la bande (44) de carte (40) suivant que celle-ci est introduite dans l'un ou l'autre guichet.

4. Portier selon une quelconque des revendications 1 à 3, caractérisé en ce qu'il comporte un moyen de temporisation lancé par l'ouverture de la porte, et déclenchant en fin de temporisation un signal d'alarme.

5. Portier selon une quelconque des revendications 1 à 4, caractérisé en ce que les signaux numériques particuliers destinés à modifier les conditions d'autorisation sélectives sont enregistrés sur la plage codée d'une carte spécialisée susceptible d'être introduite dans un guichet (11 ou 12).

6. Portier selon une quelconque des revendications 1 à 5, caractérisé en ce que les signaux numériques enregistrés sur les bandes sont divisés en mots, et que la mémoire tampon comprend des emplacements de mots à accès séquentiel, adaptée à être analysée séquentiellement en sens inverse de l'accès.

7. Portier selon une quelconque des revendications 1 à 6, où l'autorisation sélective de franchissement est soumise à des conditions temporelles, caractérisé en ce que les moyens logiques comportent une horloge émettant des signaux horaires et calendaires.

8. Portier selon une quelconque des revendications 1 à 7, caractérisé en ce que les moyens logiques comportent une sortie (29) de contrôle émettant des signaux de liste.

9. Portier selon une quelconque des revendications 1 à 8, caractérisé en ce que les moyens logiques comprennent en outre une entrée (30) de signaux numériques adaptée à l'enregistrement de ces signaux en mémoire vive.

10. Portier selon la revendication 4, caractérisé en ce qu'il comporte un moyen de déclenchement d'alarme commandé en blocage par le moyen sensible à la fermeture de la porte, et par le moyen de temporisation entre le lancement et la fin de temporisation.

**Patentansprüche**

1. Codierkarten-Türöffner, der dazu bestimmt ist, einen Kartenträger selektiv zum Durchtritt durch eine Tür in einer Wand zu autorisieren, mit einem Kartenlesegerät in Türnähe auf der Wandseite, an der sich der Träger befindet, das einen Lesekopf (20) aufweist, der dazu ausgelegt ist, ein numerisches Signal, das auf einem sich entlang einer Längsachse der Karte (40) erstreckenden codierten Streifen aufgezeichnet ist, in Abhängigkeit vom Eintreten derselben in das Lesegerät zu lesen, mit einer Türöffnungseinrichtung, die durch ein elektrisches Ausführungssignal betätigt wird, und mit Logikeinrichtungen, die das Lesegerät und die Öffnungseinrichtung verbinden und dazu ausgelegt sind, das gelesene numerische Signal mit einer Vielzahl von in einen Speicher eingeschriebenen numerischen Signalen zu vergleichen und der Öffnungseinrichtung ein Ausführungssignal zu übermitteln in Abhängigkeit von der Gleichheit des gelesenen Signals mit zumindest einem der Signale aus der Vielzahl, wobei die Logikeinrichtungen einen Mikroprozessor (22), der Festspeichern zugeordnet ist, in denen ein Programm und zumindest ein Teil der Vielzahl der vorgenannten numerischen Signale gespeichert sind, sowie einen Pufferspeicher (50) umfassen, der am Mikroprozessor (22) angeschlossen und dem Lesekopf zugeordnet ist, dadurch gekennzeichnet, daß er den selektiven Durchtritt durch die Tür in die eine oder die andere Richtung erlaubt und daß das Lesegerät einen Kanal (10) für den Durchlauf der Karte in Längsrichtung, der auf beiden Seiten der Wand in Einlaßbereichen (11, 12) mit jeweils einem auf die Anwesenheit einer Karte in dem Einlaßbereich ansprechenden Detektor (13, 14) mündet, zwischen den beiden Einlaßbereichen einen gesteuert in beiden Laufrichtungen antreibbaren Kartenförderer (15) und den Lesekopf (20) umfaßt, der in einer mittleren Stellung zwischen den Einlaßbereichen derart angeordnet ist, daß der codierte Bereich aufgrund der Mitnahme durch den Förderer (15) an diesem Kopf (20) vorbeiläuft, daß die Logikeinrichtungen dazu ausgelegt sind, auf die Einführung einer Karte in einen der Einlaßbereiche (11, 12), der aufgrund dieser Tatsache erster Einlaßbereich genannt wird, einen Lauf des Kartenförderers (15) in einer ersten Richtung auszulösen, wo die Karte vom ersten Einlaßbereich bis über den Lesekopf (20) hinausläuft, um in Abhängigkeit von dem Vergleich des vom Kopf gelesenen Signals mit den Signalen der Vielzahl in einem ersten Fall, wo die vorgenannte Übereinstimmung nicht erkannte wird, einen Lauf des Förderers entgegengesetzt zur ersten Richtung bis zum Eintreten der Karte in den ersten Einlaßbereich auszulösen, und in einem zweiten Fall, in dem diese Übereinstimmung erkannt wird, ein Ausführungssignal an die Öffnungseinrichtung (23) zu geben, daß eine auf das Schließen der Tür (24) ansprechende Einrichtung (25) anschließend einen Lauf des Förderers bis zum Eintreten der Karte in den zweiten Einlaßbereich auslöst, und daß die Logikeinrichtungen zusätzlich einen Speicher mit wahlfreiem Zugriff umfassen, der zum Speichern besonderer numerischer Signale ausgelegt ist in Ergänzung zu denjenigen, die im Festspeicher gespeichert sind, um die Vielzahl von numerischen Vergleichssignalen zu bilden, daß diese numerischen Signale in Form einer Sequenz von Signalen eingegeben sind, die verschieden sind von den vom Lesekopf (20) gelesenen Signalen, deren Vergleich sie in den zweiten Fall einordnet, um die Bedingungen für die selektive Autorisierung zu modifizieren.

2. Türöffner nach Anspruch 1, bei dem ein Teil der Vielzahl der im Speicher gespeicherten Signale einer schwarzen Liste entspricht, dadurch gekennzeichnet, daß die Logikeinrichtungen zusätzlich in Abhängigkeit vom Vergleich des vom Kopf gelesenen Signals und der Signale der Vielzahl ausgelegt sind, in einem dritten Fall, im welchem eine Übereinstimmung mit wenigstens einem Signal aus der besagten schwarzen Liste erkannt ist, einen Lauf des Förderers in die erste Richtung auszulösen, bis die Karte aus dem zweiten Einlaßbereich ausgeworfen ist.

3. Türöffner nach Anspruch 1 oder 2, dadurch gekennzeichnet, daß der Lesekopf (41) mit Bezug auf die mittlere Längsachse des Durchgangs (43) seitlich versetzt ist, um einen Unterschied von zwei Spuren (45, 46) auf dem Streifen (44) der Karte (40) je nach dem, ob sie in den einen oder den anderen Einlaßbereich eingeführt worden ist, zu ermitteln.

4. Türöffner nach einem der Ansprüche 1 bis 3, dadurch gekennzeichnet, daß eine durch die Öffnung der Tür angetriebene Verzögerungseinrichtung vorgesehen ist, welche am Ende der Verzögerung ein Alarmsignal auslöst.

5. Türöffner nach einem der Ansprüche 1 bis 4, dadurch gekennzeichnet, daß die besonderen numerischen Signale, welche dazu bestimmt sind, die selektiven Autorisierungsbedingungen zu modifizieren, auf dem codierten Bereich einer speziell ausgelegten Karte aufgezeichnet sind, die dazu geeignet ist, in einen der Einlaßbereich (11 oder 12) eingeführt zu werden.

6. Türöffner nach einem der Ansprüche 1 bis 5, dadurch gekennzeichnet, daß die auf den Streifen aufgezeichneten numerischen Signale in Worte geteilt sind, und daß der Pufferspeicher Wörterstellen zum sequentiellen Zugriff umfaßt, die dazu ausgelegt sind, in inverser Richtung des Zugriffs sequentiell analysiert zu werden.

7. Türöffner nach einem der Ansprüche 1 bis 6, bei dem das selektive Autorisieren des Durchtritts zeitlichen Bedingungen unterworfen ist, dadurch gekennzeichnet, daß die Logikeinrichtungen einen Stundensignale und Kalendersignale abgebenden Zeitgeber umfassen.

8. Türöffner nach einem der Ansprüche 1 bis 7, dadurch gekennzeichnet, daß die Logikeinrichtungen einen Kontrollausgang (29) zur Ausgabe von Listensignalen umfassen.

9. Türöffner nach einem der Ansprüche 1 bis 8, dadurch gekennzeichnet, daß die Logkeinrichtungen zusätzlich einen Eingang (30) für numerische Signale zur Abspeicherung dieser Signale im Speicher mit wahlfreiem Zugriff umfaßt.

10. Türöffner nach Anspruch 4, dadurch gekennzeichnet, daß eine Alarmauslöseeinrichtung vorgesehen ist, die von der auf das Schließen der Tür ansprechenden Einrichtung sowie von der Verzögerungseinrichtung zwischen dem Auslösen und dem Ende der Verzögerung in einen blockierten Zustand versetzt wird.

**Claims**

1. Device for use with a coded card, adapted to selectively authorise a card bearer to pass through a door in a wall, and comprising a card reader proximate to the door on the side of the wall to which the bearer has access, having a read head (20) adapted to read digital signal recorded on a coded band extending along a longitudinal axis of the card (40) in response to the engagement of the card in the reader, a means for opening the door actuated by an electrical command signal, and logic means connecting the reader and the means for opening and adapted to compare the digital signal read with a plurality of stored digital signals and to deliver to the means for opening a command signal in response to the correspondence of the read signal with at least one of the signals of the plurality, said logic means comprising a microprocessor (22) associated with read only memories in which are stored a program and at least a part of the aforesaid plurality of digital signals, and a buffer memory (50) connected to the microprocessor (22) and associated with the read head, characterised in that it is capable of authorising the selective passage through the door in one direction or the other, in that the reader comprises a channel (10) for the longitudinal passage of the card opening to each side of the wall through slots (11, 12) each having a sensor (13, 14) responsive to the presence of the card in the slot, between the two slots a card conveyor (15) having a controlled path in both directions, the read head (20) being disposed in a middle position between the slots and so that coded strip passes by said head (20) driven by the conveyor (15), the logic means being adapted, in response to the insertion of the card in one of the slots (11, 12) which will be referred to as the first slot to trigger travel of the card conveyor (15) in a first direction in which the card passes from the first slot to a position beyond the read head (20) in response to the comparison of the signal read by the head with the signals of the plurality, in a first case where the aforesaid correspondence is not determined, to trigger conveyor travel in the direction opposite to the first direction until the card is received in the first slot, in a second case where the correspondence is determined, to deliver a command signal to the means for opening (23), a means (25) responsive to the closure of the door (24) then triggering conveyor travel until the card is received in the second slot, the logic means further comprising a random access memory capable of storing particular digital signals in addition to those stored in the read only memory, to constitute a plurality of digital signals for comparison, these digital signals being introduced in the form of a sequence of distinct signals read by the read head (20) the comparison of which classifies them into the second case so as to modify the selective authorisation conditions.

2. A device according to claim 1, wherein part of the plurality of signals stored in the memory corresponds to a black list, characterised in that the logic means are further adapted, in response to the comparison of the signal read by the head and the signals of the plurality, in a third case where a correspondence is recognised with at least one signal of the said black list, to trigger conveyor travel in the first direction until the card is ejected from the second slot.

3. A device according to claim 1 or claim 2, characterised in that the read head (41) is laterally offset with respect to the median longitudinal axis of the channel (43) to scan a distinct one of two tracks (45, 46) on the band (44) of the card (40) depending on whether the card is introduced in one of the slots or the other.

4. A device according to any one of claims 1 to 3, characterised in that it comprises time delay means actuated by the opening of the door, and triggering at the end of the time delay an alarm signal.

5. A device according to any one of claims 1 to 4, characterised in that the particular digital signals adapted to modify the selective authorisation conditions are recorded in the coded strip of a specialised card adapted to be introduced in one slot (11 or 12).

6. A device according to any one of claims 1 to 5, characterised in that the digital signals recorded in the bands are divided into words, and that the buffer memory comprises sequential access word locations adapted to be analysed sequentially in the reverse direction to the access direction.

7. A device according to any one of claims 1 to 6, wherein the selective authorisation of passage is subjected to timing conditions, characterised in that the logic means comprise a clock outputting time and date signals.

8. A device according to any one of claims 1 to 7, characterised in that the logic means comprise a monitor outlet (29) outputting listing signals.

9. A device according to any one of claims 1 to 8, characterised in that the logic means further comprise a digital signal input (30) adapted for the storage of these signals in the random access memory.

10. A device according to claim 4, characterised in that it comprises a means for triggering an alarm disabled by the means responsive to the closing of the door and by the time delay means between the start and the finish of the time delay.

# FIG.1

# FIG.2

# FIG.3

# FIG.4

FIG.5    FIG.6